# EUROPÄISCHE PATENTANMELDUNG

(11) **EP 4 272 936 A1**
(43) Veröffentlichungstag der Anmeldung: **08.11.2023**
(21) Anmeldenummer: 22171184.9
(22) Anmeldetag: 02.05.2022
(51) Int. Cl.: B29C 70/06, B29D 99/00, B29L 31/30, B29B 17/00

(54) **FASERVERSTÄRKTES, ALS SICHTCARBON-BAUTEIL AUSGEBILDETES COMPOSITE-BAUTEIL, TEXTILE FLÄCHE UND VERWENDUNG DER TEXTILEN FLÄCHE FÜR EIN ALS SICHTCARBON-BAUTEIL AUSGEBILDETES COMPOSITE-BAUTEIL SOWIE VERFAHREN ZUR HERSTELLUNG EINES SOLCHEN COMPOSITE-BAUTEILS**

(71) Anmelder: V-Carbon GmbH, 82024 Taufkirchen (DE)
(72) Erfinder: Die Erfindernennung liegt noch nicht vor
(74) Vertreter: Canzler & Bergmeier Patentanwälte Partnerschaft mbB

(57) **Zusammenfassung**

Ein faserverstärktes Composite-Bauteil (1), welches als Sichtcarbon-Bauteil ausgebildet ist, weist eine auf zumindest einer Sichtseite (2) des Composite-Bauteils (1) angeordnete, äußere Decklage (3) aus Carbonfasern (4) und einer transparenten Kunststoff-Matrix (5), in welche die Carbonfasern (4) eingebettet sind, auf. Die Decklage (3) umfasst eine aus mehreren Faserkomplexen (6) gebildete textile Fläche (7) und die Faserkomplexe (6) umfassen jeweils eine Vielzahl von parallelisierten Carbonfasern (4). Die Faserkomplexe (6) liegen innerhalb der textilen Fläche (7) zueinander ausgerichtet vor und bilden eine sichtbare, regelmäßige Struktur aus. Die Carbonfasern (4) der textilen Fläche (7) weisen einen Anteil von wenigstens 50%, vorzugsweise wenigstens 80%, recycelter Carbonfasern (4) in Form von Stapelfasern auf.

## Beschreibung

Die vorliegende Erfindung betrifft ein faserverstärktes Composite-Bauteil, welches als Sichtcarbon-Bauteil ausgebildet ist, mit einer auf zumindest einer Sichtseite des Composite-Bauteils angeordneten, äußeren Decklage aus Carbonfasern und einer transparenten Kunststoff-Matrix, in welche die Carbonfasern eingebettet sind. Die Decklage umfasst eine aus mehreren Faserkomplexen gebildete textile Fläche, wobei die Faserkomplexe jeweils eine Vielzahl von parallelisierten Carbonfasern umfassen und wobei die Faserkomplexe innerhalb der textilen Fläche zueinander ausgerichtet vorliegen und eine sichtbare, regelmäßige Struktur ausbilden. Weiterhin betrifft die Erfindung eine textile Fläche für eine äußere Decklage eines solchen faserverstärkten, als Sichtcarbon-Bauteil ausgebildeten Composite-Bauteils sowie die Verwendung der textilen Fläche zur Herstellung eines solchen Composite-Bauteils. Ebenso betrifft die Erfindung ein Verfahren zur Herstellung eines solchen faserverstärkten, als Sichtcarbon-Bauteil ausgebildeten Composite-Bauteils.

Carbonfaserverstärkte Verbundwerkstoffe haben eine breite Anwendung in den verschiedensten technischen Gebieten gefunden. Bauteile aus Carbonfaserverstärkten Kunststoffen (CFK) können bis zu 50% leichter als Stahlbauteile und bis 30% leichter als Aluminiumbauteile gleicher Festigkeit sein. Sie kommen deshalb zur Anwendung, wenn geringes Gewicht und zugleich sehr gute mechanische Eigenschaften gefordert sind. Allerdings sind Bauteile aus carbonfaserverstärkten Kunststoffen vergleichsweise teuer. Ihre Einsatzgebiete sind deshalb oft auf Anwendungsfälle beschränkt, in denen sich bei der Herstellung in der gesamten Prozesskette oder bei der späteren Anwendung, insbesondere aufgrund des geringeren Gewichts oder einer längeren Lebensdauer, die zunächst höheren Kosten wieder relativieren. Ebenso kommen sie häufig in hochpreisigen Produkten zum Einsatz.

Insbesondere in der Automobilindustrie werden carbonfaserverstärkte Kunststoffbauteile oft auch als sogenannte Sichtcarbon-Bauteile hergestellt, um den hochwertigen Werkstoff auch nach außen hin sichtbar zu machen und eine ästhetische Anmutung zu erzeugen. Dabei werden die Carbonfasern in einer transparenten Matrix angeordnet und meist mit einer Klarlackschicht versehen. Dabei kann das gesamte Bauteil aus einem CFK-Werkstoff bestehen, von dem die oberste bzw. äußerste Schicht nach außen hin sichtbar ist. Es ist jedoch auch bekannt, lediglich die oberste Schicht eines Bauteils aus einem CFK-Werkstoff auszubilden, um die hochwertige Carbon-Optik bei reduzierten Kosten zu erzielen, beispielsweise, wenn die guten mechanischen Eigenschaften des Carbonmaterials gar nicht benötigt werden. In diesem Fall wird die äußere Carbonlage auf einem Trägerbauteil angeordnet. Für alle Sichtcarbon-Anwendungen ist es von enormer Wichtigkeit, dass die Carbonfasern gerade und parallel in der Kunststoffmatrix liegen, um eine hochwertige und gleichmäßige Optik zu erzielen.

Die DE 10 2015 100 925 A1 beschreibt ein Verfahren zur Herstellung eines solchen Sichtcarbon-Bauteils. Dort soll das Eindringen des Lacks in die Zwischenräume der Faserstruktur verbessert werden, indem zuvor eine Nassimprägnierung mit einer wässrigen Polymerdispersion durchgeführt wird.

Ebenso beschreibt die DE 10 2017 204 311 A1 ein solches Sichtcarbon-Bauteil. Dabei soll eine Lage aus Sichtcarbon auf einem Sandwichbauteil angeordnet sein, das an die funktionalen und geometrischen Erfordernisse angepasst ist.

Die Herstellung von Carbonfasern und carbonfaserverstärkten Kunststoffbauteile ist jedoch nicht nur teuer, sondern auch sehr energieaufwendig. Aufgabe der vorliegenden Erfindung ist es daher, ein faserverstärktes Composite-Bauteil vorzuschlagen, das nachhaltig und kostengünstig herstellbar ist und ein hochwertiges Erscheinungsbild in einer Sichtcarbon-Anwendung ermöglicht. Weiterhin soll eine textile Fläche für eine äußere Decklage eines solches Composite-Bauteils sowie ein Verfahren zur Herstellung eines solchen faserverstärkten Composite-Bauteils vorgeschlagen werden.

Die Aufgabe wird gelöst mit den Merkmalen der unabhängigen Patentansprüche.

Ein faserverstärktes Composite-Bauteil, welches als Sichtcarbon-Bauteil ausgebildet ist, weist eine auf zumindest einer Sichtseite des Composite-Bauteils angeordnete, äußeren Decklage aus Carbonfasern und einer transparenten Kunststoff-Matrix auf, in welche die Carbonfasern eingebettet sind.

Die Decklage umfasst eine aus mehreren Faserkomplexen gebildete textile Fläche und die Faserkomplexe umfassen jeweils eine Vielzahl von parallelisierten Carbonfasern. Die Faserkomplexe liegen innerhalb der textilen Fläche zueinander ausgerichtet vor und bilden eine sichtbare, regelmäßige Struktur aus.

Es wird vorgeschlagen, dass die Carbonfasern der textilen Fläche einen Anteil von wenigstens 50% recycelter Carbonfasern in Form von Stapelfasern aufweisen.

Es wird weiterhin ein entsprechenden Verfahren zur Herstellung eines faserverstärkten Composite-Bauteils, welches als Sichtcarbon-Bauteil ausgebildet ist, vorgeschlagen. Das vorgeschlagene Verfahren umfasst zumindest die Schritte:
- Bereitstellen von Carbonfasern mit einem Anteil von wenigstens 50%, recycelter Carbonfasern in Form von Stapelfasern,
- Parallelisieren der recycelten Carbonfasern und Ausbilden von Faserkomplexen aus den Carbonfasern,
- Ausrichten der Faserkomplexe zueinander und Herstellen einer textilen Fläche aus den Faserkomplexen, wobei die Faserkomplexe eine sichtbare, regelmäßige Struktur ausbilden,
- Anordnen der textilen Fläche als äußere Decklage auf zumindest einer Sichtseite des Composite-Bauteils,
- Einbetten der textilen Fläche in eine transparente Kunststoff-Matrix, und
- Aushärten des Composite-Bauteils.

Bauteile aus Sichtcarbon werden im Stand der Technik üblicherweise aus Carbonneufasern produziert, die aufgrund ihrer Herstellungsprozesses eine sehr hohe Gleichmäßigkeit aufweisen. Dabei werden Tausende von Carbon-Endlosfilamenten zu Carbon-Rovings zusammengefasst, aus welchen dann wiederum eine textile Fläche ausgebildet wird. Aufgrund der Gleichmäßigkeit der Filamente kann dabei das hochwertige, gleichmäßige Erscheinungsbild erzielt werden. Demgegenüber liegen Recyclingfasern nach dem Recyclingprozess als diskontinuierliche Fasern mit unterschiedlichen Längen und Durchmessern vor.

Gemäß der vorliegenden Erfindung können nun auch recycelte Carbonfasern für hochwertige Sichtcarbonanwendungen eingesetzt werden. Das hierfür erforderliche hochwertige und gleichmäßige Erscheinungsbild wird dabei dadurch erreicht, dass die Fasern als Stapelfasern bereitgestellt werden und vor ihrem Einbringen in die Decklage des Bauteils parallelisiert und zu Faserkomplexen zusammengefasst werden. Die Faserkomplexe können dann im Unterschied zu Einzelfasern ausgerichtet werden und dadurch eine gleichmäßige textile Fläche ausbilden, die auch hohen optischen und funktionalen Anforderungen genügt. Die Composite-Bauteile können dabei durch die Verwendung von Recyclingfasern zugleich sehr kostengünstig und energiesparend hergestellt werden. Insbesondere durch den Einsatz von noch unbehandelten Verschnittresten und anderen Produktionsabfällen können hohe Energie- und Kosteneinsparungen erzielt werden. Ebenso können bei der Verwendung von Recyclingfasern aus End-of-Life-Bauteilen trotz der für den Recyclingprozess benötigten Energie im Vergleich zu Neuerzeugung bis zu 80% Energie und damit auch Kosten eingespart werden. Es kann damit ein erheblicher Beitrag zur Reduktion des CO₂-Ausstoßes und zur Ressourcenschonung geleistet werden.

Dieselben Vorteile gelten auch für eine textile Fläche für eine äußere Decklage eines solchen faserverstärkten, als Sichtcarbon-Bauteil ausgebildeten Composite-Bauteils sowie die Verwendung einer solchen textilen Fläche zur Herstellung eines faserverstärkten Composite-Bauteils, wofür ebenfalls Schutz beansprucht wird.

Unter einem Faserkomplex wird im Rahmen der vorliegenden Anmeldung eine Vielzahl von Einzelfasern verstanden, die zu einem zusammenhängenden Strang zusammengefasst sind. Dies kann mit Hilfe von Bindematerialien oder Hilfsfasern bzw. Umwindefäden oder auch rein mechanisch z.B. durch Verdrehung erfolgen. Faserkomplexe können beispielsweise Rovings, Garne, Bänder, Tapes, Flechtmaterialien und dgl. umfassen.

Besonders vorteilhaft ist es deshalb bei dem Bauteil und der textilen Fläche auch, wenn der Anteil an recycelten Carbonfasern wenigstens 80 % beträgt. Die Energie- und Kosteneinsparungen können hierdurch noch weiter gesteigert werden und der CO₂-Ausstoß reduziert werden. Vorteilhaft ist es deshalb auch, wenn sogar 100 % recycelte Carbonfasern zum Einsatz kommen.

Besonders vorteilhaft ist es bei dem Verfahren, wenn die Carbonfasern in einem chemischen Recyclingprozess wiedergewonnen werden. Diese können im Gegensatz zu einem thermischen Recyclingprozess somit nahezu CO₂-neutral hergestellt werden.

Vorteilhaft ist es, wenn die Faserkomplexe der textilen Fläche und des Bauteils eine Breitentoleranz von weniger als 1 mm, vorzugsweise weniger als 0,5 mm und besonders bevorzugt von weniger als 0,3 mm aufweisen. Eine geringe Breitentoleranz trägt weiter zu einem optisch hochwertigen und einheitlichen Erscheinungsbild bei. Natürlich hängt es dabei aber von der Art der Faserkomplexe und deren Herstellung ab, welche Toleranzen erreicht werden können. Während bei einem breiteren Faserkomplex mit einer Breite von beispielsweise 15 mm oder 20 mm eine Breitentoleranz von 1 mm gute optische Ergebnisse erzielt, ist bei einem Faserkomplex mit einer Breite vom 3 mm oder 1 mm natürlich eine geringere Toleranz von weniger als 0,5 mm vorteilhaft.

Weiterhin ist es vorteilhaft, wenn die Decklage des faserverstärkten Composite-Bauteils einen Faservolumengehalt von mehr als 45 % aufweist. Es kann bei einem derartigen Faservolumengehalt eine gute Durchdringung der Fasern mit dem Matrixmaterial erreicht werden und eine optisch ansprechende Oberfläche erzeugt werden. Dennoch können dabei auch für strukturelle Bauteile in Sichtcarbon-Ausführung gute mechanische Eigenschaften erzielt werden.

Ebenfalls vorteilhaft ist es bei dem faserverstärkten Composite-Bauteil, wenn die Kunststoff-Matrix ein Duromermaterial beinhaltet. Die Composite-Bauteile weisen hierdurch sehr gute mechanische Eigenschaften auf. Ebenso können die Bauteile hierdurch mit einer sehr widerstandsfähigen Oberfläche hergestellt werden. Die Bauteile sind dadurch beispielsweise auch ohne eine zusätzliche Schutzschicht für Exterieur-Anwendungen im Automobilbereich geeignet.

Denkbar ist es aber insbesondere für Anwendungen, in denen lediglich die Sichtcarbon-Optik benötigt wird, auch, ein thermoplastisches Matrixmaterial einzusetzen. Derart hergestellte Composite-Bauteile könnten beispielsweise Computergehäuse, Hüllen für Mobiltelefone oder Abdeckungsbauteile, insbesondere auch Abdeckungsbauteile im Interieur im Automobilbereich sein.

Zudem ist es vorteilhaft, wenn die die Faserkomplexe der textilen Fläche und des Bauteils ein Breiten-Dickenverhältnis von mehr als 2:1 aufweisen. Hierdurch kann eine textile Fläche mit einem Erscheinungsbild und Eigenschaften wie bei der Verwendung von Spread-Tows erzeugt werden. Ein weiterer Vorteil hiervon ist, dass durch das Spreizen das Material eine geringere Wandstärke erhält und somit weniger Material benötigt wird.

Für das hochwertige Erscheinungsbild der textilen Fläche und des Composite-Bauteils ist es zudem äußerst vorteilhaft, wenn die Carbonfasern innerhalb der Faserkomplexe hochausgerichtet sind, wobei ein Ausrichtungsgrad der Carbonfasern mindestens 90% +/-5° beträgt. Dies bedeutet, dass mindestens 90% der Carbonfasern eine maximale Abweichung von 5° zur Längsausrichtung der Faserkomplexe haben. Der hohe Ausrichtungsgrad der einzelnen Carbonfasern trägt dabei zur Gleichmäßigkeit der Faserkomplexe bei.

Vorteilhaft ist es, wenn die Faserkomplexe innerhalb des Composite-Bauteils bzw. innerhalb der textilen Fläche eine Länge von wenigstens 5 cm aufweisen. Mit einer solchen Länge können die Faserkomplexe in der textilen Fläche leichter ausgerichtet werden. Ebenso wird das gleichmäßige Erscheinungsbild dadurch verbessert.

Besonders vorteilhaft ist es deshalb auch, wenn die Faserkomplexe aus einem Endlosprodukt hergestellt sind. Die recycelten Carbonfasern, die in Form von Stapelfasern vorliegen, können beispielsweise zu einem Garn versponnen oder mit Hilfe eines Bindematerials zu einem Tape zusammengefasst werden. Werden die Faserkomplexe als Endlosprodukte hergestellt, so können Sie ebenso wie Carbonneufasern, die als Endlosfilamente vorliegen, zu Gelegen, Geweben oder anderen textilen Flächen verarbeitet werden.

Insbesondere ist es vorteilhaft, wenn die Faserkomplexe der textilen Fläche bzw. des Composite-Bauteils als vorgefertigte Tapes ausgebildet sind. In einem Tape können die Fasern mit einem besonders hohen Ausrichtungsgrad angeordnet werden und es können Faserkomplexe mit guten mechanischen Kennwerten erzielt werden.

Werden die Faserkomplexe der textilen Fläche bzw. des Composite-Bauteils als längsgeschnittene Tapes mit wenigstens einer Schnittkante ausgebildet, so kann die bevorzugte Breite zu einem eingestellt und zum anderen auch mit einer besonders geringen Toleranz eingehalten werden. Hierzu werden Tapes mit einer Breite von bis zu 25 mm längs in mehrere schmälere Tapes mit einer geringeren Breite von beispielsweise 3 mm geschnitten. Dabei können die Tapes beispielsweise mit einer Breitentoleranz von weniger als 0,5 mm und bevorzugt von weniger als 0,3 mm hergestellt werden. Denkbar ist es jedoch auch, die Tapes bereits in der gewünschten Breite herzustellen und dabei auch die Toleranz entsprechend einzustellen. Da die Tapes in der Regel mit Hilfe eines Bindematerials hergestellt werden, kann das Tape beispielsweise während des Abbindens in der Breite geformt werden. Die selben Vorteile werden auch bei dem entsprechenden Verfahren erreicht.

Weiterhin ist es vorteilhaft, wenn eine Breite der Faserkomplexe der textilen Fläche bzw. des Composite-Bauteils weniger als 25 mm, bevorzugt weniger als 15 mm und besonders bevorzugt weniger als 6 mm beträgt. Insbesondere ist es vorteilhaft, wenn eine Breite der Faserkomplexe weniger als 3 mm beträgt, da hierdurch eine besonders feine, regelmäßige Struktur in der textilen Fläche erzeugt werden kann. Je nach Anwendungszweck kann jedoch auch eine etwas gröbere Optik erwünscht sein.

Weiterhin ist es vorteilhaft, wenn eine Dicke der Faserkomplexe der textilen Fläche bzw. des Composite-Bauteils zwischen 0,1 mm und 0,3 mm beträgt. Hierdurch können auch dünne Laminate hergestellt werden, bei denen lediglich eine Sichtcarbonschicht auf eine Trägerstruktur oder Verstärkungslage aufgebracht wird.

Nach einer Weiterbildung der Erfindung ist es vorteilhaft, wenn die textile Fläche weitere Faserkomplexe aus Carbonneufasern aufweist. Die Faserkomplexe aus Carbonneufasern können dabei beispielsweise in einem Gelege parallel im Wechsel mit Faserkomplexen aus recycelten Carbonfasern gelegt werden. Ebenso können in einem biaxialen Gelege in der einen Hauptrichtung Faserkomplexe aus recycelten Carbonfasern und in der anderen Hauptrichtung Faserkomplexe aus Carbonneufasern gelegt werden. Ebenfalls denkbar ist es, bei einem Gewebe in Kette und Schuss unterschiedliche Faserkomplexe einzusetzen. Dieselben Vorteile gelten auch für das Composite-Bauteil. Bei dem Verfahren ist es entsprechend vorteilhaft, wenn weitere Faserkomplexe aus Carbonneufasern bereitgestellt werden, ausgerichtet werden und in die textile Fläche eingebracht werden.

Das Flächengewicht der textilen Fläche kann dabei zwischen 8 g/m² und 3000 g/m² betragen. Die Faserkomplexe können in unterschiedlichen Dicken hergestellt werden, so dass sowohl dünne Laminate als auch dickere Lagen von Strukturteilen hergestellt werden können.

Vorteilhaft ist es auch, wenn die Faserkomplexe der textilen Fläche bzw. des Composite-Bauteils in zumindest einer Hauptrichtung der textilen Fläche der Decklage, vorzugsweise in zwei Hauptrichtungen, jeweils parallel zueinander ausgerichtet sind bzw. ausgerichtet werden. Die textile Fläche weist hierdurch in der jeweiligen Hauptrichtung sehr homogene Eigenschaften auf. Vorzugsweise beträgt dabei eine Parallelitätsabweichung weniger als 5°, insbesondere weniger als 3°, und besonders vorteilhaft zwischen 1° und 3° bezogen auf eine Länge von 10 cm in der ebenen textilen Fläche. Dies bedeutet, dass die Parallelitätsabweichung ermittelt wird, wenn die textile Fläche in der Ebene abgelegt ist und noch nicht dreidimensional verformt ist, da sich beim Umformen die textile Fläche verziehen könnte.

Bei dem Verfahren ist es entsprechend vorteilhaft, wenn die Faserkomplexe in zumindest einer Hauptrichtung der textilen Fläche, vorzugsweise in zwei Hauptrichtungen, jeweils parallel zueinander ausgerichtet werden, wobei vorzugsweise eine Parallelitätsabweichung weniger als 5°, insbesondere weniger als 3°, bezogen auf eine Länge von 10 cm in der ebenen textilen Fläche beträgt.

Ebenso ist es bei der textilen Fläche und dem Composite-Bauteil vorteilhaft, wenn die textile Fläche der Decklage wenigstens zwei Hauptrichtungen aufweist, wobei vorzugsweise die Hauptrichtungen in einem rechten Winkel zueinander angeordnet sind. Die textile Fläche ist in diesem Fall biaxial ausgebildet. Besonders vorteilhaft ist es dabei, wenn die textile Fläche ein Carbonfasergewebe ist. Bei dem Verfahren werden entsprechend die Faserkomplexe in der textilen Fläche in wenigstens zwei Hauptrichtungen ausgerichtet, insbesondere zu einem Carbonfasergewebe verwebt.

Um eine besonders hochwertige und ggf. auch verschleißfeste Oberfläche des Composite-Bauteils zu erzeugen, ist es zudem vorteilhaft, wenn auf der Decklage eine transparente Schutzschicht, insbesondere eine Klarlackschicht oder eine Folie, angeordnet ist bzw. angeordnet wird.

Vorteilhaft ist es ebenfalls, wenn die recycelten Carbonfasern der textilen Fläche bzw. des Composite-Bauteils eine Faserlänge zwischen 2 mm und 100 mm aufweisen, insbesondere zwischen 20 mm und 100 mm aufweisen. Insbesondere mit längeren Faserlängen kann dabei die Gleichmäßigkeit der Faserkomplexe und das hochwertige Erscheinungsbild der textilen Fläche unterstützt werden.

Um das Composite-Bauteil in Sichtcarbon-Bauweise auch für strukturelle Anwendungen einsetzen zu können, ist es vorteilhaft, wenn das Bauteil wenigstens eine unter der Decklage angeordnete Verstärkungslage und/oder eine auf einer der ersten Sichtseite gegenüberliegenden zweiten Sichtseite des Composite-Bauteils angeordnete zweite äußere Decklage aufweist bzw. wenn bei dem Verfahren die Verstärkungslage und/oder die zweite äußere Decklage entsprechend angeordnet werden.

Insbesondere kann ein solches Composite-Bauteil vorteilhaft im Automobilbereich eingesetzt werden. Vorteilhaft ist es, wenn das Bauteil ein Kraftfahrzeug-Sichtbauteil ist, insbesondere ein Exterieur-Bauteil, wie beispielsweise ein Fahrzeugdach, eine Motorhaube, ein Spoiler, eine Heckklappe, ein Kotflügel oder ein Abdeckungsbauteil, insbesondere eine Spiegelkappe oder eine Antennenabdeckung.

Weitere Vorteile der Erfindung werden anhand der nachfolgend dargestellten Ausführungsbeispiele beschrieben. Es zeigen:
- **Figur 1**: eine perspektivische Darstellung eines Kraftfahrzeugs mit einer Vielzahl von Composite-Bauteilen,
- **Figur 2**: eine schematische Schnittdarstellung eines Composite-Bauteils mit einer Verstärkungslage,
- **Figur 3**: eine schematische Schnittdarstellung eines Composite-Bauteils nur mit einer Decklage und einer Schutzschicht,
- **Figur 4**: eine schematische Darstellung eines Faserkomplexes mit recycelten Carbonfasern in Form eines Tapes,
- **Figur 5**: eine schematische Draufsicht eines Faserkomplexes mit recycelten Carbonfasern in Form eines Umwindegarnes,
- **Figur 6**: eine schematische Querschnittsdarstellung eines Faserkomplexes in Form eines Tapes,
- **Figur 7**: eine schematische Querschnittsdarstellung eines Faserkomplexes in Form eines Umwindegarnes,
- **Figur 8**: eine schematische Längsschnittsdarstellung eines Faserkomplexes in Form eines Tapes,
- **Figur 9**: eine schematische Ansicht einer textilen Fläche in Form eines Gewebes,
- **Figur 10**: eine schematische Ansicht einer textilen Fläche in Form eines Geleges,
- **Figur 11**: eine weitere Ausführung einer textilen Fläche in Form eines Geleges in einer schematischen Ansicht, und
- **Figur 12**: eine weitere Ausführung eines Geleges in einer schematischen Ansicht.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale. Weiterhin sind aus Gründen der Übersichtlichkeit von mehreren identischen Bauteilen bzw. Merkmalen oftmals nur eines oder nur einige wenige beschriftet.

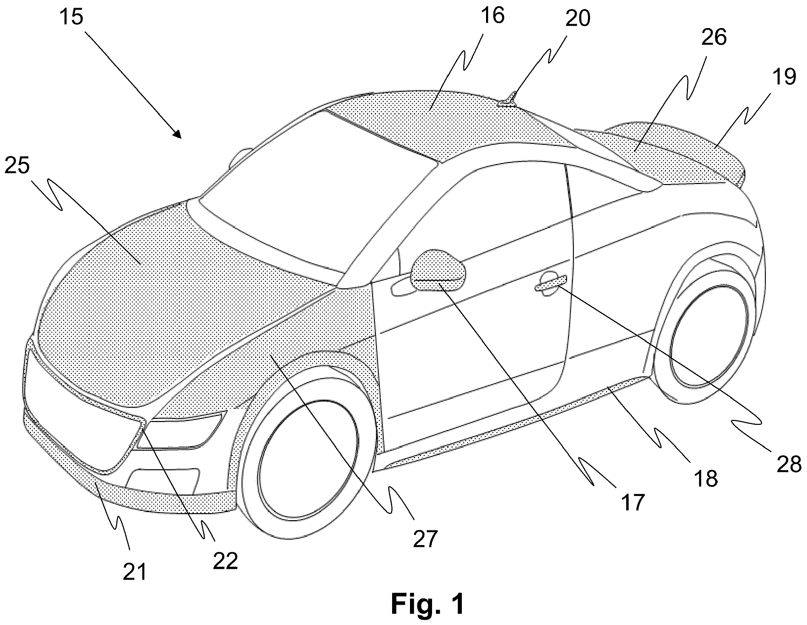

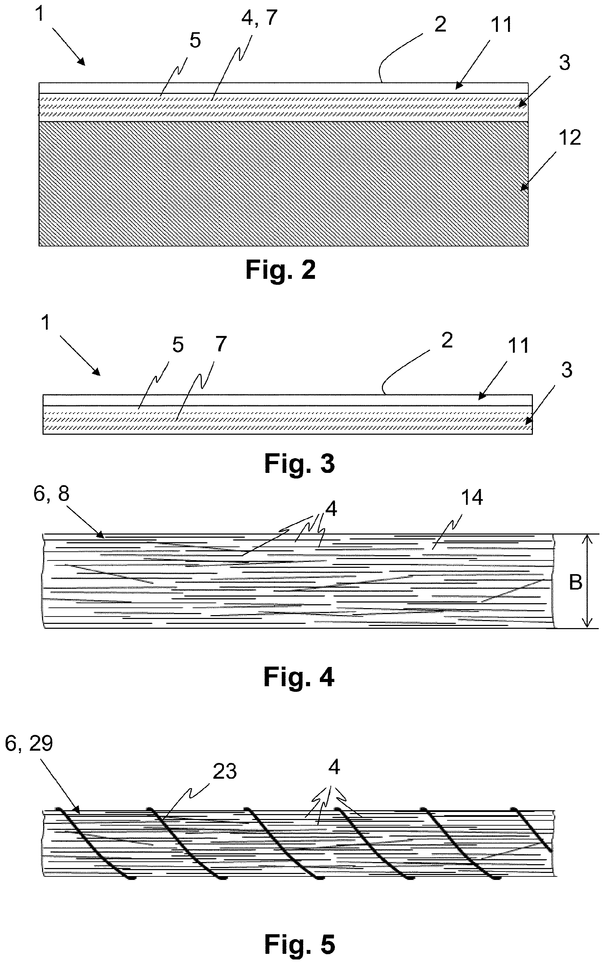

Figur 1 zeigt eine perspektivische Darstellung eines Kraftfahrzeugs 15, das beispielhaft einen Anwendungsbereich für Composite-Bauteile 1 (siehe Figur 2 und 3) gemäß der vorliegenden Erfindung darstellt. Dargestellt ist im Wesentlichen die Karosserie des Fahrzeugs mit einer Vielzahl von Exterieur-Bauteilen. Die Bauteile, die häufig als Sichtcarbon-Bauteile ausgeführt sind, sind dabei schattiert dargestellt.

Typische Anwendungsfälle für Sichtcarbon-Bauteile im Automobilbereich sind beispielsweise Karosserieteile wie Fahrzeugdächer 16, Motorhauben 25, Heckklappen 26, Spoiler wie der hier dargestellte Heckspoiler 19 oder Kotflügel 27. Ebenso kommen Sichtcarbonteile häufig bei Exterieur-Bauteilen wie Frontblenden 21, Kühlergrills 22, Schwellerleisten 18 und Abdeckungen zum Einsatz. Dargestellt sind hier eine Spiegelkappe 17 und eine Antennenabdeckung 20. Als weiteres Exterieur-Bauteil ist ein Türgriff 28 gezeigt. Natürlich können Composite-Bauteile gemäß der vorliegenden Erfindung jedoch auch im Interieurbereich eingesetzt werden.

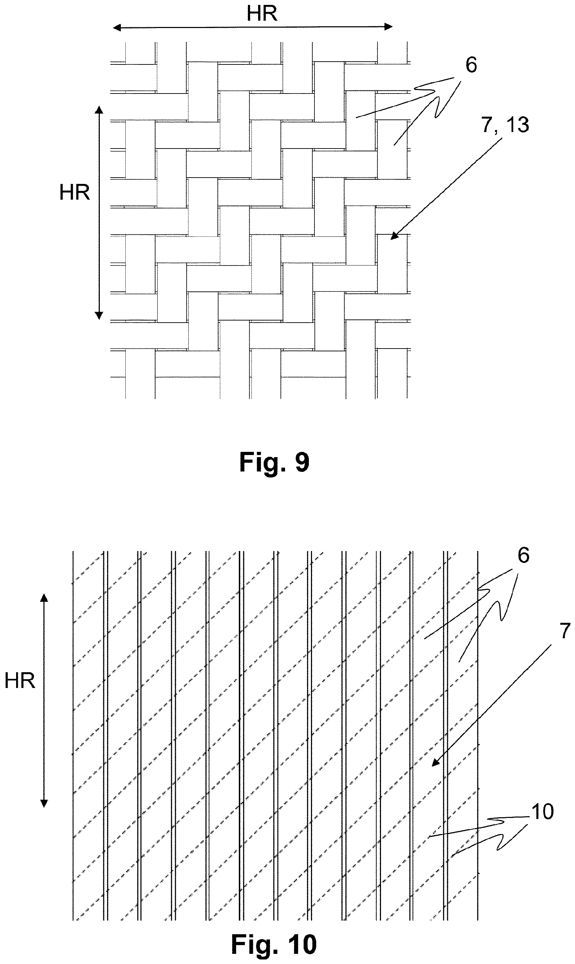

Figur 2 zeigt ein faserverstärktes Composite-Bauteil 1, welches als Sichtcarbon-Bauteil ausgebildet ist, in einer schematischen Schnittdarstellung. Dabei ist auf zumindest einer Sichtseite 2 des Composite-Bauteils 1 eine äußere Decklage 3 aus Carbonfasern 4 und einer transparenten Kunststoffmatrix 5, in welche die Carbonfasern 4 eingebettet sind, angeordnet. Zumindest bei Anwendungen im Automobil-Exterieurbereich ist die Kunststoff-Matrix 5 vorzugsweise aus einem Duromermaterial ausgeführt. Die Carbonfasern 4 liegen dabei in Form einer textilen Fläche 7 in der Decklage 3 vor. Die textile Fläche 7 ist dabei aus mehreren Faserkomplexen 6 gebildet, die hier nicht bezeichnet sind und anhand der Figuren 4 - 8 noch näher beschrieben werden. Die Faserkomplexe 6 liegen innerhalb der textilen Fläche 7 zueinander ausgerichtet vor und bilden eine sichtbare, regelmäßige Struktur der textilen Fläche 7 aus, wie anhand der Figuren 9 - 12 noch erläutert wird.

Gemäß der vorliegenden Darstellung ist die Decklage 3 auf einer Verstärkungslage 12 angeordnet. Die Verstärkungslage 12 kann ebenfalls eine Lage aus einem faserverstärkten Kunststoff sein, ebenso könnte die Verstärkungslage 12 jedoch auch ein Sandwichaufbau sein. Die Verstärkungslage 12 könnte weiterhin auch eine Trägerstruktur, beispielsweise ein Kunststoffbauteil sein, auf welches die Decklage 3 aufgelegt ist. Gemäß vorliegender Darstellung ist weiterhin auf der Decklage 3 eine transparente Schutzschicht 11 angeordnet, die beispielsweise eine Klarlackschicht oder eine Folie umfassen kann. Diese verleiht dem Composite-Bauteil 1 je nach Ausführung eine besonders strapazierfähige oder verschleißfeste oder auch optisch besonders hochwertige Oberfläche.

Eine solche Schutzschicht 11 muss jedoch nicht unbedingt vorhanden sein. Je nach Ausführung der Kunststoffmatrix 5 kann auch auf eine Schutzschicht 11 verzichtet werden. Ebenso könnte abweichend von der gezeigten Darstellung auf der der ersten Sichtseite 2 gegenüberliegenden Seite des Composite-Bauteils 1 ebenfalls eine Decklage 3 angeordnet sein, die eine zweite Sichtseite 2 des Composite-Bauteils 1 ausbildet.

Figur 3 zeigt eine andere Ausführung eines Composite-Bauteils 1. Im Unterschied zu dem Composite-Bauteil 1 der Figur 2 umfasst dieses Composite-Bauteil nur die der Decklage 3 und die Schutzschicht 11. Im Übrigen entspricht der Aufbau dem des Composite-Bauteils 1 der Figur 2. Eine solche Ausführung eines Composite-Bauteils 1 kann beispielsweise für dünne Abdeckungsbauteile verwendet werden.

Gemäß der Erfindung ist vorgesehen, dass die Carbonfasern 4 der textilen Fläche 7 einen Anteil von wenigstens 50%, vorzugsweise wenigstens 80%, recycelter Carbonfasern 4 in Form von Stapelfasern aufweisen. Bei Composite-Bauteilen 1, welche als Sichtcarbon-Bauteile ausgeführt sind, ist in der Regel ein besonders gleichmäßiges und regelmäßiges Erscheinungsbild der textilen Fläche 7 erwünscht. Da Recyclingfasern nach dem Recyclingprozess als Stapelfasern unterschiedlicher Länge vorliegen, werden diese zu Faserkomplexen 6 zusammengefasst. Die Faserkomplexe 6 können sodann wie Kohlefaserrovings aus Carbonneufasern verwendet werden und zu einer textilen Fläche 7 zusammengefügt werden. Hierdurch kann trotz der Verwendung von Recyclingfasern eine gleichmäßige und regelmäßige Struktur der textilen Fläche ausgebildet werden.

Figur 4 zeigt eine schematische Draufsicht auf einen Faserkomplex 6, der vorliegend in Form eines Tapes 8 mit einer Breite B ausgebildet ist. Der Faserkomplex 6 umfasst eine Vielzahl von parallelisierten Carbonfasern 4, die vorliegend lediglich symbolisch als Striche dargestellt sind. Innerhalb des Tapes 8 bzw. des Faserkomplexes 6 sind die einzelnen Carbonfasern 4 mittels eines Bindematerials 14 zusammengehalten. Die vorliegende Darstellung ist dabei lediglich schematisch zu verstehen. Je nach Ausführung des Bindematerials 14 sind die einzelnen Carbonfasern 4 in einer Ansicht unter Umständen gar nicht sichtbar, sondern würden erst in einer Schnittansicht erkennbar sein. Das Bindematerial 14 kann beispielsweise ein thermoplastisches Bindematerial 14 sein. Andere Bindematerialen 14 wie Schlichtemittel kommen jedoch ebenfalls infrage.

Um das hochwertige Erscheinungsbild des Faserkomplexes 6 zu erreichen, müssen die einzelnen Carbonfasern 4 hoch ausgerichtet in dem Faserkomplex 6 vorliegen. Dies ist der vorliegenden Figur 4 entnehmbar, bei welcher lediglich einige wenige Carbonfasern 4 etwas schräg zu einer Längserstreckung des Tapes 8 liegen. Dem Ausrichten der Carbonfasern bei der Herstellung des Tapes 8 bzw. des Faserkomplexes 6 kommt deshalb eine sehr hohe Bedeutung zu. Hierzu sind bereits verschiedene Verfahren bekannt geworden. Beispielsweise können in einem Nassprozess die einzelnen Carbonfasern 4 mit einem Fluid auf Platten gespritzt werden. Die Carbonfasern 4 rutschen sodann an den Platten entlang, wobei sie sich ausrichten, und treffen schließlich auf einen an der Unterseite der Platten angeordneten, bewegten Film, auf dem sie nacheinander abgelegt werden. Hierdurch wird schließlich das Tape 8 ausgebildet. Eine solche Methode ist beispielsweise in der WO 2014/170637 A1 beschrieben. Allerdings ist dieses Verfahren auf kürzere Faserlängen beschränkt.

Bevorzugt werden deshalb die Carbonfasern 4 in einem textilen Herstellungsprozess auf einem Krempel oder einer Karde ausgerichtet. Die so entstandenen Vliese können im Anschluss zu Faserbändern mit parallelisierten und ausgerichteten Carbonfasern 4 zusammengefasst und beispielsweise in einem Verstreckungsprozess noch weiter ausgerichtet werden. Werden die Carbonfasern 4 mit einem Bindematerial 14 vermischt, so kann dieses während oder auch nach dem Ausrichten der Carbonfasern 4 beispielsweise durch Wärme oder auch chemisch aktiviert werden, um die Carbonfasern in dem Tape 8 zu binden. Hierdurch können Tapes 8 mit einem hohen Ausrichtungsgrad der Carbonfasern 4 erzeugt werden.

Figur 5 zeigt eine andere Ausführung eines Faserkomplexes 6, welcher in Form eines Garns 29 vorliegt. Die Carbonfasern 4 welche auch hier als Recycling-Stapelfasern vorliegen können beispielsweise in einem Spinnprozess durch die Drehung miteinander verbunden werden. Vorliegend ist jedoch eine andere Ausführung gezeigt, bei welcher das Garn 29 als Umwindegarn ausgebildet ist und bei welchem die einzelnen Carbonfasern 4 mittels eines Umwindefadens 23 zu einem Faserkomplex 6 verbunden sind.

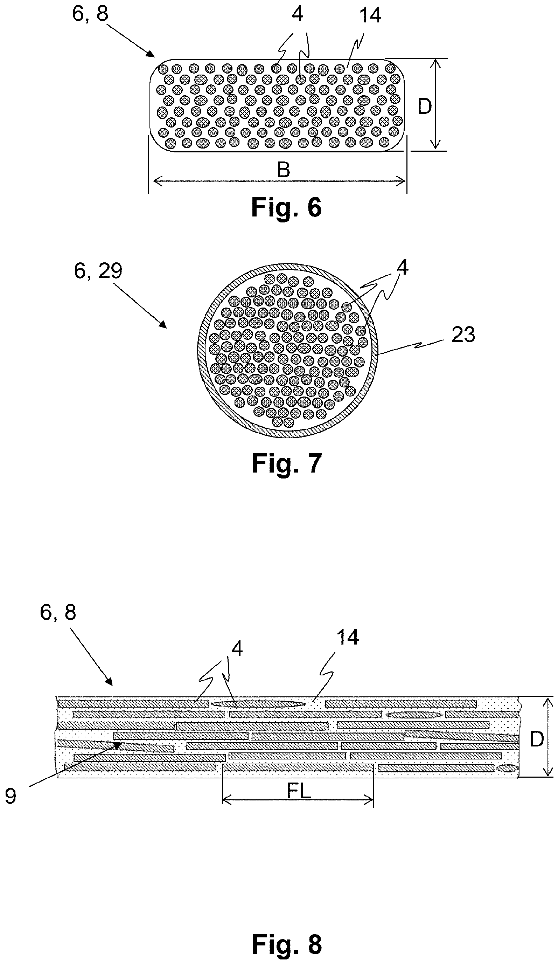

Figur 6 zeigt demgegenüber einen Querschnitt eines Faserkomplexes 6, der ebenfalls in Form eines Tapes 8 ausgebildet ist. Dabei ist wiederum gut erkennbar, dass die einzelnen Carbonfasern 4 parallel zueinander und ausgerichtet in dem Faserkomplex 6 vorliegen und durch das Bindematerial 14 gebunden sind.

Ebenso sind die Abmessungen des Faserkomplexes 6 mit der Breite B und der Dicke D dargestellt. Vorteilhaft ist es, wenn, wie hier gezeigt, die Faserkomplexe 6 ein Breiten- Dickenverhältnis von mehr als 2:1 aufweisen. Hierdurch kann beispielsweise in einem Carbongewebe die typische Sichtcarbonoptik gut abgebildet werden. Die hier gezeigten Abmessungen sind jedoch lediglich beispielhaft zu verstehen. Es können ebenfalls breitere, bis zu 15 mm oder bis zu 25 mm breite Tapes 8 erzeugt werden. Diese können für dünne Deckschichten 3 auch lediglich eine Dicke D von weniger als 0,3 mm aufweisen.

Um schmälere Tapes 8 für eine feinere Struktur zu erzeugen, können breitere Tapes 8 auch mehrfach längs geschnitten werden. Hierdurch kann in besonders vorteilhafter Weise kostengünstig eine Vielzahl von schmäleren Tapes 8 hergestellt werden. Zugleich können durch das Schneiden in Längsrichtung die Tapes 8 mit einer besonders geringen breiten Toleranz hergestellt werden, was ein hochwertiges optisches Erscheinungsbild des Sichtcarbon-Bauteils weiter unterstützt.

Figur 7 zeigt einen Querschnitt eines anderen Faserkomplexes 6, welcher als Garn 29 ausgebildet ist. Wie bereits anhand der Figur 5 erläutert, kann das Garn 29 als Umwindegarn ausgebildet sein, bei welchem die Carbonfasern 4 mittels eines Umwindefadens 23 zusammengehalten sind.

Figur 8 zeigt schließlich einen Längsschnitt eines als Tape 8 ausgebildeten Faserkomplexes 6. Dabei ist wiederum erkennbar, wie die einzelnen Carbonfasern 4 mit einem sehr hohen Ausrichtungsgrad mittels des Bindematerials 14 verbunden sind. Lediglich einige wenige Carbonfasern 4 liegen mit einem größeren Winkel zur Längserstreckung des Faserkomplexes 6. Eine geringe Schräglage der Carbonfasern 4 kann dabei in Bezug auf beide Richtungen des Tapes 8 auftreten. Dies ist an der Schnittkante 9 bzw. Schnittfläche anhand eines elliptischen Erscheinungsbildes einzelner Carbonfasern 4 ersichtlich. Ebenso ist eine Faserlänge FL der Carbonfasern 4 dargestellt, welche zwischen 2 mm und 100 mm, bevorzugt jedoch mehr als 20 mm betragen kann.

Figur 9 zeigt eine erste Ausführung einer textilen Fläche 7, die vorliegend als Carbonfasergewebe 13 ausgebildet ist. Vorliegend ist das Carbonfasergewebe 13 in Köperbindung ausgeführt, mittels welcher die typische Optik eines Sichtcarbonbauteils besonders gut erzielt werden kann. Natürlich kommen aber auch andere Bindungsarten wie Leinwandbindung oder auch aufwändigere Bindungen infrage. Die Faserkomplexe 6 können dabei sowohl als Tapes 8 als auch als Garne 29 vorliegen. Im vorliegenden Fall sind die Faserkomplexe 6 in zwei Hauptrichtungen HR der textilen Fläche 7 jeweils parallel zueinander angeordnet, wobei die beiden Hauptrichtungen HR zueinander senkrecht stehen.

Ein besonders hochwertiges Erscheinungsbild der textilen Fläche 7 und damit auch des Composite-Bauteils 1 kann erreicht werden, wenn eine Parallelitätsabweichung der Faserkomplexe 6 möglichst gering ist. Dies ist beim Webprozess sehr gut realisierbar, sodass die Parallelitätsabweichung der Faserkomplexe 6 nach dem Weben im Wesentlichen von den Breitentoleranzen der einzelnen Garne 29 oder Tapes 8 abhängt. Deshalb ist es gerade in einem Carbonfasergewebe 13 wesentlich, dass die Faserkomplexe eine sehr geringe Breitentoleranz von vorzugsweise weniger als 0,5 mm und besonders bevorzugt sogar nur 0,3 mm aufweisen.

Figur 10 zeigt eine andere Ausführung einer textilen Fläche 7, bei welcher die Faserkomplexe 6 in Form eines Geleges vorliegen. Im vorliegenden Fall sind dabei die einzelnen Faserkomplexe unidirektional in nur einer Hauptrichtung HR ausgerichtet und durch Hilfsfäden 10 miteinander verbunden. Natürlich ist aber auch ein solches Gelege als biaxiales Gelege oder multiaxiales Gelege herstellbar.

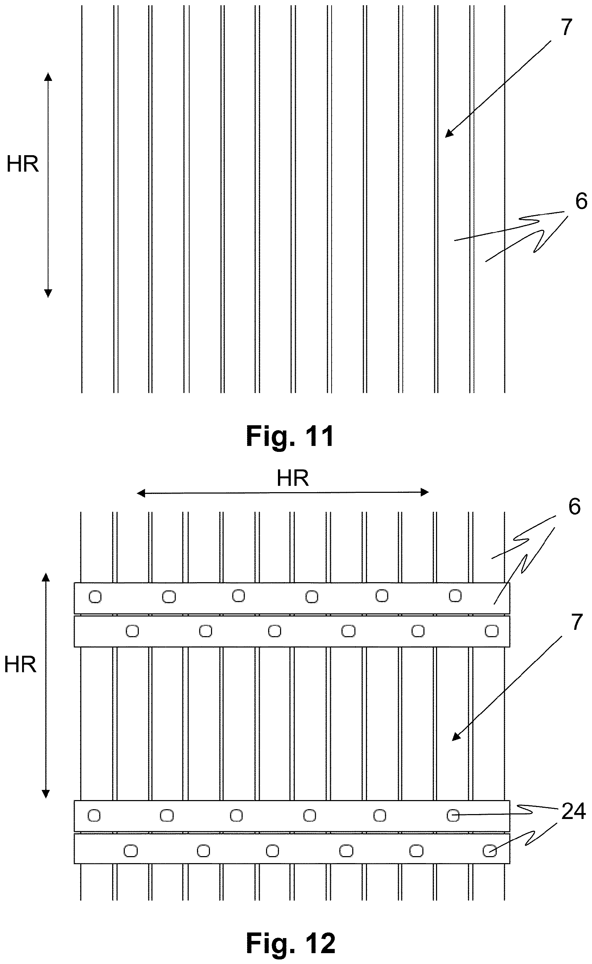

Figur 11 zeigt eine weitere Ausführung einer textilen Fläche 7 als Gelege, welches ebenfalls nur eine Hauptrichtung HR aufweist. Die einzelnen Faserkomplexe 6 sind dabei parallel nebeneinander angeordnet. Ebenso wie zuvor schon zum Carbonfasergewebe 13 beschrieben, sind dabei möglichst geringe Parallelitätsabweichungen erwünscht, was durch die Herstellung der Faserkomplexe 6 mit einer möglichst geringen Breitentoleranz erreicht werden kann. Die einzelnen Faserkomplexe 6 können dabei ebenfalls, wie in Figur 10 gezeigt, mittels Hilfsfäden 10 oder anderer Fixierelemente 24 miteinander verbunden sein, können jedoch auch lediglich auf in einem Trägermaterial oder einer Trägerfolie aufgelegt sein oder sogar direkt in die Form gelegt werden.

Figur 12 zeigt schließlich eine weitere Ausführung einer textilen Fläche 7, bei welche mehrere Faserkomplexe 6 in zwei Hauptrichtungen HR, welche auch hier zueinander senkrecht stehen, abgelegt sind. Die Faserkomplexe 6 sind vorliegend mittels Fixierelementen 24 miteinander verbunden. Die Fixierelemente 24 können beispielsweise Klammern, Fäden oder dergleichen sein. Alternativ ist es auch denkbar, die Faserkomplexe 6 lediglich miteinander zu vernadeln.

Bezüglich der textilen Flächen 7 sind zahlreiche Abwandlungen und auch bestimmte Designs sowohl bei Gelegen als auch bei Geweben möglich. Durch die Zusammenfassung der recycelten Carbonstapelfasern zu Faserkomplexen können textile Flächen in verschiedensten Ausführungen und Erscheinungsbildern erzeugt werden und in hochwertigen Sichtcarbon-Anwendungen eingesetzt werden.

Die Anwendungsmöglichkeiten der vorliegenden Erfindung sind jedoch nicht auf den Automobilbereich beschränkt. Auch bei Gebrauchsgegenständen sowie bei hochpreisigen Artikeln wird häufig eine Sichtcarbonoptik erwünscht, um die Hochwertigkeit des Produktes darzustellen. Beispiele wären hier Fahrräder, Motorräder, Computergehäuse, Hüllen für Mobiltelefone, Möbel und andere.

### Bezuszeichenliste

- 1: Composite-Bauteil
- 2: Sichtseite
- 3: Decklage
- 4: Carbonfasern
- 5: Kunststoff-Matrix
- 6: Faserkomplex
- 7: textile Fläche
- 8: Tape
- 9: Schnittkante
- 10: Hilfsfasern
- 11: Schutzschicht
- 12: Verstärkungslage
- 13: Carbonfasergewebe
- 14: Bindematerial
- 15: Kraftfahrzeug
- 16: Fahrzeugdach
- 17: Spiegelkappe
- 18: Schwellerleiste
- 19: Heckspoiler
- 20: Antennenabdeckung
- 21: Frontblende
- 22: Kühlergrill
- 23: Umwindefaden
- 24: Fixierelement
- 25: Motorhaube
- 26: Heckklappe
- 27: Kotflügel
- 28: Türgriff
- 29: Garn
- B: Breite
- D: Dicke
- FL: Faserlänge
- HR: Hauptrichtung

## Patentansprüche

1. Faserverstärktes Composite-Bauteil (1), welches als Sichtcarbon-Bauteil ausgebildet ist,
mit einer auf zumindest einer Sichtseite (2) des Composite-Bauteils (1) angeordneten, äußeren Decklage (3) aus Carbonfasern (4) und einer transparenten Kunststoff-Matrix (5), in welche die Carbonfasern (4) eingebettet sind,
wobei die Decklage (3) eine aus mehreren Faserkomplexen (6) gebildete textile Fläche (7) umfasst und wobei die Faserkomplexe (6) jeweils eine Vielzahl von parallelisierten Carbonfasern (4) umfassen, wobei die Faserkomplexe (6) innerhalb der textilen Fläche (7) zueinander ausgerichtet vorliegen und eine sichtbare, regelmäßige Struktur ausbilden,
**dadurch gekennzeichnet,**
**dass** die Carbonfasern (4) der textilen Fläche (7) einen Anteil von wenigstens 50%, vorzugsweise wenigstens 80%, recycelter Carbonfasern (4) in Form von Stapelfasern aufweisen.

2. Faserverstärktes Composite-Bauteil (1) nach dem vorherigen Anspruch, **dadurch gekennzeichnet, dass** die Faserkomplexe (6) eine Breitentoleranz von weniger als 1 mm, vorzugsweise weniger als 0,5 mm, aufweisen.

3. Faserverstärktes Composite-Bauteil (1) nach einem der vorherigen Ansprüche, **dadurch gekennzeichnet, dass** die Decklage (3) einen Faservolumengehalt von mehr als 45 % aufweist.

4. Faserverstärktes Composite-Bauteil (1) nach einem der vorherigen Ansprüche, **dadurch gekennzeichnet, dass** die Kunststoff-Matrix (5) ein Duromermaterial beinhaltet.

5. Faserverstärktes Composite-Bauteil (1) nach einem der vorherigen Ansprüche, **dadurch gekennzeichnet, dass** die Faserkomplexe (6) ein Breiten-Dickenverhältnis von mehr als 2:1 aufweisen.

6. Faserverstärktes Composite-Bauteil (1) nach einem der vorherigen Ansprüche, **dadurch gekennzeichnet, dass** die Carbonfasern (4) innerhalb der Faserkomplexe (6) hoch ausgerichtet sind, wobei ein Ausrichtungsgrad der Carbonfasern (4) mindestens 90% +/-5° beträgt.

7. Faserverstärktes Composite-Bauteil (1) nach einem der vorherigen Ansprüche, **dadurch gekennzeichnet, dass** die Faserkomplexe (6) aus einem Endlosprodukt hergestellt sind, insbesondere als vorgefertigte Tapes (8), insbesondere als längsgeschnittene Tapes (8) mit wenigstens einer Schnittkante (9), ausgebildet sind.

8. Faserverstärktes Composite-Bauteil (1) nach einem der vorherigen Ansprüche, **dadurch gekennzeichnet, dass** eine Breite (B) der Faserkomplexe (6) weniger als 25 mm, bevorzugt weniger als 6 mm und besonders bevorzugt weniger als 3 mm beträgt und/oder dass eine Dicke (D) der Faserkomplexe (6) zwischen 0,1 - 0,3 mm beträgt.

9. Faserverstärktes Composite-Bauteil (1) nach einem der vorherigen Ansprüche, **dadurch gekennzeichnet, dass** die textile Fläche (7) weitere Faserkomplexe (6) aus Carbonneufasern aufweist.

10. Faserverstärktes Composite-Bauteil (1) nach einem der vorherigen Ansprüche, **dadurch gekennzeichnet, dass** die Faserkomplexe (6) in zumindest einer Hauptrichtung (HR) der textilen Fläche (7) der Decklage (3), vorzugsweise in zwei Hauptrichtungen (HR), jeweils parallel zueinander ausgerichtet sind, wobei eine Parallelitätsabweichung vorzugsweise weniger als 5°, insbesondere weniger als 3°, bezogen auf eine Länge von 10 cm in der ebenen textilen Fläche (7) beträgt.

11. Faserverstärktes Composite-Bauteil (1) nach einem der vorherigen Ansprüche, **dadurch gekennzeichnet, dass** die textile Fläche (7) der Decklage (3) wenigstens zwei Hauptrichtungen (HR) aufweist, wobei vorzugsweise die Hauptrichtungen (HR) in einem rechten Winkel zueinander angeordnet sind.

12. Faserverstärktes Composite-Bauteil (1) nach einem der vorherigen Ansprüche, **dadurch gekennzeichnet, dass** auf der Decklage (3) eine transparente Schutzschicht (11), insbesondere eine Klarlackschicht oder eine Folie, angeordnet ist.

13. Faserverstärktes Composite-Bauteil (1) nach einem der vorherigen Ansprüche, **dadurch gekennzeichnet, dass** die recycelten Carbonfasern (4) eine Faserlänge (FL) zwischen 2 mm und 100 mm aufweisen, insbesondere zwischen 20 mm und 100 mm aufweisen.

14. Faserverstärktes Composite-Bauteil (1) nach einem der vorherigen Ansprüche, **dadurch gekennzeichnet, dass** das Bauteil ein Kraftfahrzeug-Sichtbauteil ist, insbesondere ein Exterieur-Bauteil, insbesondere ein Fahrzeugdach (16), eine Motorhaube (25), ein Heckspoiler (19), eine Heckklappe (26), ein Kotflügel (27) oder ein Abdeckungsbauteil ist, insbesondere eine Spiegelkappe (17) oder eine Antennenabdeckung (20).

15. Textile Fläche (7) für eine äußere Decklage (3) eines faserverstärkten, als Sichtcarbon-Bauteil ausgebildeten Composite-Bauteils (1) nach einem der vorhergehenden Ansprüche, wobei die textile Fläche (7) aus mehreren Faserkomplexen (6) gebildet ist, welche jeweils eine Vielzahl von parallelisierten Carbonfasern (4) umfassen, wobei die Faserkomplexe (6) innerhalb der textilen Fläche (7) zueinander ausgerichtet vorliegen und eine sichtbare, regelmäßige Struktur ausbilden,
**dadurch gekennzeichnet,**
**dass** die Carbonfasern (4) der textilen Fläche (7) einen Anteil von wenigstens 50%, vorzugsweise wenigstens 80%, recycelter Carbonfasern (4) in Form von Stapelfasern aufweisen.

16. Textile Fläche (7) nach dem vorherigen Anspruch, **dadurch gekennzeichnet, dass** die Faserkomplexe (6) eine Breitentoleranz von weniger als 1 mm, vorzugsweise von weniger als 0,5 mm, aufweisen.

17. Textile Fläche (7) nach einem der Ansprüche 15 oder 16, **dadurch gekennzeichnet, dass** die Carbonfasern (4) innerhalb der Faserkomplexe (6) hochausgerichtet sind, wobei ein Ausrichtungsgrad der Carbonfasern (4) mindestens 90% +/-5° beträgt.

18. Textile Fläche (7) nach einem der Ansprüche 15 - 17, **dadurch gekennzeichnet, dass** die Faserkomplexe (6) ein Breiten-Dickenverhältnis von mehr als 2:1 aufweisen, wobei vorzugsweise die Faserkomplexe (6) eine Breite von weniger als 25 mm, bevorzugt weniger als 6 mm und besonders bevorzugt weniger als 3 mm aufweisen.

19. Textile Fläche (7) nach einem der Ansprüche 15 - 18, **dadurch gekennzeichnet, dass** die textile Fläche (7) wenigstens zwei Hauptrichtungen (HR) aufweist, wobei die textile Fläche (7) vorzugsweise ein Carbonfasergewebe ist.

20. Textile Fläche (7) nach einem der Ansprüche 15 - 19, **dadurch gekennzeichnet, dass** die recycelten Carbonfasern (4) eine Faserlänge (FL) zwischen 2 mm und 100 mm aufweisen, insbesondere zwischen 20 mm und 100 mm aufweisen.

21. Verwendung einer textilen Fläche (7) nach einem der Ansprüche 15 - 20 zur Herstellung eines faserverstärkten Composite-Bauteils (1) nach einem der Ansprüche 1 -14.

22. Verfahren zur Herstellung eines faserverstärkten Composite-Bauteils (1), welches als Sichtcarbon-Bauteil ausgebildet ist, nach einem der Ansprüche 1 - 14, umfassend zumindest die Schritte:
- Bereitstellen von Carbonfasern (4) mit einem Anteil von wenigstens 50%, vorzugsweise wenigstens 80%, recycelter Carbonfasern (4) in Form von Stapelfasern,
- Parallelisieren der recycelten Carbonfasern (4) und Ausbilden von Faserkomplexen (6) aus den Carbonfasern (4),
- Ausrichten der Faserkomplexe (6) zueinander und Herstellen einer textilen Fläche (7) aus den Faserkomplexen (6), wobei die Faserkomplexe (6) eine sichtbare, regelmäßige Struktur ausbilden,
- Anordnen der textilen Fläche (7) als äußere Decklage (3) auf zumindest einer Sichtseite (2) des Composite-Bauteils (1),
- Einbetten der textilen Fläche (7) in eine transparente Kunststoff-Matrix (5), und
- Aushärten des Composite-Bauteils (1).

23. Verfahren nach dem vorherigen Anspruch, **dadurch gekennzeichnet, dass** die Faserkomplexe (6) in zumindest einer Hauptrichtung (HR) der textilen Fläche (7), vorzugsweise in zwei Hauptrichtungen (HR), jeweils parallel zueinander ausgerichtet werden, wobei vorzugsweise eine Parallelitätsabweichung weniger als 5°, insbesondere weniger als 3°, bezogen auf eine Länge von 10 cm in der ebenen textilen Fläche (7) beträgt.
